# EUROPÄISCHE PATENTSCHRIFT

(11) **EP 3 463 642 B1**
(45) Veröffentlichungstag und Bekanntmachung des Hinweises auf die Patenterteilung: **20.01.2021**
(21) Anmeldenummer: 17735000.6
(22) Anmeldetag: 07.06.2017
(51) Int. Cl.: B01J 19/00

(54) **MIKROREAKTOR UND VERFAHRENSFÜHRUNG ZUR METHANISIERUNG**
MICRO-REACTOR AND METHOD IMPLEMENTATION FOR METHANATION
MICRORÉACTEUR DE MÉTHANISATION ET MISE EN UVRE D'UN PROCÉDÉ DE MÉTHANISATION

(30) Priorität: 07.06.2016 DE 102016110498
(43) Veröffentlichungstag der Anmeldung: 10.04.2019
(73) Patentinhaber: Karlsruher Institut für Technologie, 76131 Karlsruhe (DE)
(72) Erfinder: PFEIFER, Peter, 76351 Linkenheim (DE); BELIMOV, Michael, 76139 Karlsruhe (DE)
(74) Vertreter: Fitzner, Uwe
(86) Internationale Anmeldenummer: PCT/EP2017/063778
(87) Internationale Veröffentlichungsnummer: WO 2017/211864

(56) Entgegenhaltungen:
- EP-A2- 1 724 010
- WO-A1-2007/112945
- WO-A1-2011/134630
- DE-U1-202010 000 262
- US-A1- 2003 152 488

## Beschreibung

Die Erfindung betrifft einen Reaktor, bevorzugt Mikroreaktor zur Methanisierung, sowie den Betrieb dieses Reaktors, also die Prozessführung zur Herstellung von Methan.

Um einen Umstieg von Fossilien auf regenerative Energieträger zu gewährleisten, ist es zunächst notwendig, Möglichkeiten zur Speicherung von Energie zur Verfügung zu stellen. Insbesondere, da Strom aus Wind- und Sonnenenergie hohen tagesperiodischen bzw. saisonalen Fluktuationen unterliegt.

Einen Ansatz ist dabei die Speicherung von Energie in chemischen Verbindungen, insbesondere als Wasserstoff, Sauerstoff oder kurzkettige Kohlenwasserstoffe wie z.B. Methan.

Dabei wird z.B. Strom aus Wind- und Sonnenenergie, der nicht sofort verbraucht wird, eingesetzt um Wasser elektrolytisch in Wasserstoff und Sauerstoff zu spalten. In einer anschließenden Synthese mit dem emittierten CO₂, z.B. aus Biogasanlagen, können so Kohlenwasserstoffe wie z.B. Methan synthetisiert werden und für eine spätere Verwendung gelagert werden. Diese Kohlenwasserstoffe können unmittelbar durch Verbrennung zur Energiegewinnung eingesetzt werden, als Rohstoffe zur weiteren Synthese oder zur Rückverstromung und damit Gewinnung von elektrischer Energie. Damit kann eine stabile Stromversorgung aus Wind- und Solarenergie erreicht werden.

Da die regenerative Energie nur örtlich zur Verfügung stellt, müssen auch dezentrale Ansätze zur Speicherung der Energie bzw. zur Herstellung und Speicherung der entsprechenden, "energiespeichernden" chemischen Verbindungen erfolgen.

Solche dezentralen Anlagen unterscheiden sich deutlich sowohl im Aufbau, als auch in der Prozessführung von den bisher bekannten großindustriellen Anlagen. Aus der DE 10 2005 004 075 B4 ist zum Beispiel ein keramischer Mikroreaktor bekannt, bei welchem eine gleichmäßige Verteilung des Stoffstromes über mehrere Blenden erreicht wird, um eine Methanisierung bei Temperaturen von 200°C bis 1.000°C durchführen zu können.

Mikroreaktoren oder Vorrichtungen zur Energiegewinnung enthaltend Mikrostrukturen sind ferner aus US 20020106311, US 6,200,536 B1, US 7,297,324 B2, US 6,192,596 B1 und US 5,811,062 A und US2003/152488 bekannt.

Verfahren zur Herstellung von Methan sind z.B. aus der EP 2 213 367 A1, EP 0 241 902 A1 oder US 7,297,324 B2 bekannt. Dabei wird Methan aus Wasserstoff, Kohlenmonoxid und Kohlendioxid hergestellt.
Problematisch bei der Methanherstellung aus H₂, CO₂ und CO ist die Gestaltung der Temperatur im Reaktor. Eine Umsetzung muss bei Temperaturen von mindestens 200°C erfolgen, um die Bildung von Metall-Carbonylen zu verhindern, die einen Austrag von Katalysator aus dem Reaktor bedeuten können. Andererseits sollte ein Mindestumsatz von 70% CO₂ erreicht werden, der thermodynamisch nur bei niedrigen Temperaturen um 200°C möglich ist. So kann Methan in der notwendigen Reinheit hergestellt werden und der Aufwand zur Abtrennung des verbleibenden CO₂ vermieden werden. Zu beachten ist hierbei eine möglichst hohe und ggf. gleichbleibende Methanqualität, die insbesondere durch den Wobbe-Index charakterisiert wird. Gemäß Wobbe-Index ist bei der Verwendung von Brenngasen nicht nur der Heizwert von Bedeutung, sondern auch die Dichte des eingesetzten Brenngases, um so den für eine bestimmte Energiemenge notwendigen Volumenstrom einzusetzen. Neben-, Überschuss- oder Restbestandteile wie CO₂ und H₂ ändern sowohl Heizwert als auch Wobbe-Index.

Weiteres Problem ist bei Temperaturen zwischen 250°C und 500°C (bei Normaldruck) die Koksbildung am Katalysator in Gegenwart von Kohlenmonoxid. Sofern die thermodynamische Gleichgewichtszusammensetzung noch nicht erreicht ist, sollte aus Gründen des Anstiegs der Reaktionsgeschwindigkeit mit der Temperatur lokal eine möglichst hohe Reaktionstemperatur angestrebt werden um den Reaktor möglichst kompakt und kostengünstig zu gestalten.

Andererseits kann es in dem Reaktionsraum zu lokalen Temperaturmaxima kommen, sog. Hot-Spots. Hier herrscht eine höhere Temperatur als im Rest des Reaktors. Die Hots-Spots können einerseits unerwünschte Nebenreaktionen bewirken, so dass es zur Bildung von Nebenprodukten kommt, die nicht erwünscht sind und teilweise nur schwer oder nicht abtrennbar vom Hauptprodukt sind. Ab einer bestimmten Hot-Spot-Temperatur kann der Katalysator auch irreversibel geschädigt werden. Die Hot-Spot-Bildung stellt mithin ein zusätzliches Problem dar, das letztendlich zu einer Katalysator-Desaktivierung führt. Dieses Problem wird reduziert durch die Verwendung eines großen Überschusses an Katalysator, oder durch die Herstellung hoch- temperaturbeständiger Katalysatoren, die genau an die vorliegenden Bedingungen angepasst wurden. Somit wird kein Hot-Spot vermieden, sondern nur die Reaktorbetriebszeit ohne Katalysatorwechsel erhöht. Die Konsequenz ist ein größerer und damit teurer Reaktor oder Katalysator.

Bei Gegenstromkühlung nähert sich der Temperaturverlauf im Katalysatorbett am Reaktorausgang meist der Kühlmitteltemperatur an. Dadurch läuft der Hotspot durch Katalysator-Desaktivierung langsam durch den Reaktor und nähert sich dem Reaktorausgang. Zu diesem Zeitpunkt folgt der Austausch des Katalysators.
Eine Möglichkeit zur Vermeidung starker Hotspots ist die Rückführung des Produktgases zur Inertisierung des eintretenden Gasgemisches in eine erste Reaktionsstufe. Durch diese Inertisierung mit dem Produkt wird die Reaktionsgeschwindigkeit abgesenkt, was ein größeres Reaktorvolumen erforderlich macht. Außerdem ist dieses Verfahren kontraproduktiv für die Herstellung möglichst reinen Methans.

Aufgabe der vorliegenden Erfindung war es, die Nachteile des Standes der Technik zu überwinden und einen Reaktor, bevorzugt Mikroreaktor, sowie eine entsprechende Prozessführung zur Verfügung zu stellen, die den modernen Erfordernissen auch mit Blick auf nachhaltigen Umweltschutz gerecht wird.
Der Reaktor soll eine möglichst hohe Ausnutzung von Wärme, insbesondere durch eine möglichst hohe Endtemperatur im Wärmeübertragungsmedium, gewährleisten. Mithin soll eine Katalysatordesaktivierung bei ungenügender Kühlung des Katalysatorbetts vermieden werden. Auch sollen die Einsatztemperaturen nicht durch Koksbildung beschränkt sein, die zu einer Verstopfung - insbesondere bei Mikroreaktoren - führen kann.
Diese Bedingungen sollen trotz der thermodynamischen Limitierung der CO₂-Umsetzung in einem Gemisch aus CO₂ und CO erfüllt werden.

Aufgabe der vorliegenden Erfindung ist es, einen geeigneten Reaktor zur Verfügung zu stellen, der einerseits eine ausreichende Kühlung des Reaktionsraums gewährleistet, um die Nachteile bedingt durch Hot-Spots zu verringern und/oder zu vermeiden.
Andererseits soll auch eine zu starke Absenkung der Temperatur vermieden werden, da dies quasi zu einem Erlöschen der Reaktion im Reaktionsraum führen kann. Theoretisch wäre dies durch eine dicke Trennwand zwischen Reaktionsraum und Kühlraum zu gewährleisten. Diese führt jedoch zu einem hohen Temperaturgradienten zwischen diesen beiden Räumen. Ein hoher Temperaturgradient führt seinerseits jedoch wieder zur Bildung von Hot-Spots.

Häufig ist der Methanisierung eine Hochtemperaturelektrolyse (HT-Elektrolyse) vorgeschaltet, bei welcher aus Wasserdampf und CO2 Wasserstoff, Sauerstoff und CO erzeugt wird.

Aufgabe der vorliegenden Erfindung war es auch, die Abwärme der Methanisierung zur Erzeugung von Prozessdampf für die HT-Elektrolyse zu verwenden. Dazu soll eine möglichst hohe Endtemperatur im Wärmeübertragungsmedium, dem Kühlfluid erzielt werden. Die Elektrolyse erfolgt dabei nicht immer vollständig, so dass Reste an Wasserdampf und CO₂ im Produkt der Elektrolyse vorhanden sind.

Die Methanisierung (Methanbildung, Methansynthese) aus H₂ und CO und/oder CO₂ ist eine exotherme Reaktion, die erfindungsgemäß durch Verdampfung gekühlt wird. Die Temperatur im Katalysatorbett zur Umsetzung von CO beträgt vorzugweise ca. 350°C-450°C. Dies bedingt eine hohe Temperatur der Verdampfung. Für eine optimale Kühlung müsste der Siedepunkt des Kühlfluids an die Temperatur im Katalysatorbett angepasst werden. Dies erfordert jedoch besondere Kühlmittel.

Aufgabe der vorliegenden Erfindung ist es ferner, ein kostengünstiges Verfahren und den entsprechenden Reaktor zur Verfügung zu stellen.

Gelöst wird diese Aufgabe durch einen Reaktor mit Reaktorhülle, Reaktionsraum und Kühlraum sowie mit fluiddichten, getrennten Zuleitungen für mindestens einen fluiden Reaktanden und für ein Kühlfluid dadurch gekennzeichnet, dass mindestens zwei Zuleitungen für das Kühlfluid vorliegen mit mindestens jeweils einer übereinander gefalteten Kanal- und Säulenstruktur mit Stromumkehr gemäß Anspruch 1.

Unter Stromumkehr ist im Sinne der Erfindung eine Strömungsumkehr, also Umlenkung des Fluidstroms bzw. der Strömung, insbesondere eine Umlenkung der Strömungsrichtung um 180 Grad zu verstehen. Mit anderen Worten fließt das Fluid nach der Stromumkehr im Gegenstrom zur Stromrichtung bzw. Strömungsrichtung vor der Umlenkung. So kann das Kühlfluid beispielsweise nach der Zuleitung in Gegenstrom zur Strömungsrichtung der Reaktanden im Reaktionsraum fließen und nach der Umlenkung, nach der Stromumkehr also durch eine Kanalstruktur in Gleichstrom zur Strömungsrichtung der Reaktanden im Reaktionsraum und vice versa. Eine Stromumkehr ist also auch von Gleichstrom bzw. Strömungsrichtung der Reaktanden im Reaktionsraum auf Gegenstrom möglich.
Innerhalb einer Leitung fließt das Kühlfluid immer von der Zuleitung zur Ableitung. bzw. von Eingang Reaktionsraum zum Ausgang Reaktionsraum. Eine Umlenkung bzw. Stromumkehr findet also nicht innerhalb der Leitung statt, sondern ergibt sich aus der Führung bzw. Lage der Leitungen und Leitungsbereiche zueinander. Die Lage der einzelnen Bereiche der Leitung zueinander ergibt sich erfindungsgemäß durch übereinander liegende Kanalstrukturen. Mit anderen Worten wurde die Fluidleitung gefaltet. Zur Faltung bzw. zur Verbindung zwischen zwei einzelnen Kanalstrukturen oder zwischen Kanalstruktur und Zu- und Ableitung in und auf dem Reaktor oder in und auf dem Kühlraum sind Säulenstrukturen notwendig.
Erfindungsgemäß sind die Begriffe Stromumkehr, Strömungsumkehr, Umbau der Strömungsrichtung, Umkehr der Strömung, Umlenkung der Strömung oder der Strömungsrichtung, insbesondere um 180 Grad gleichbedeutend.
Als axial wird die Richtung bzw. Anordnung parallel zu dem Reaktionsraum und/oder Kühlraum, bzw. parallel zu der Strömung im Reaktionsraum bezeichnet, senkrecht dazu als radial.
Die Kanalstrukturen sind axial ausgerichtet, also parallel zur Strömungsrichtung der Reaktanden im Reaktionsraum. Die Säulenstrukturen sind senkrecht dazu, also radial ausgerichtet.
Im Sinne der Erfindung sind die übereinander gefalteten bzw. angeordneten Kanal- und Säulenstrukturen radial übereinander angeordnet, mithin befinden sich die Kanäle beziehungsweise. Kanalstrukturen einer Leitung, also jene Bereiche der Leitung die axial angeordnet sind, radial übereinander.

Sowohl die Zuleitungen für den mindestens einen fluiden Reaktanden sowie für das Kühlfluid sind fluiddicht und demgemäß auch fluiddicht voneinander getrennt.

Als Reaktionsraum wird jener Raum bezeichnet, in welchem die Reaktion stattfindet. Der Reaktionsraum ist eine längliche Aushöhlung bzw. Kanal mit beliebigem Querschnitt, der lediglich über zwei Öffnungen verfügt: Eine zum Eintritt des mindestens eines Reaktanden, bevorzugt eines Reaktionsgases bzw. Gasgemischs; und die andere Öffnung gegenüberliegend, zum Auftritt des Reaktionsproduktes.

Als Kühlraum im Sinne der Erfindung wird jener Raum bezeichnet, in welchem das Kühlfluid die Temperatur im Reaktionsraum durch Wärmeaufnahme senkt wobei die Temperatur des Kühlfluids erhöht wird. Erfindungsgemäß gehören Zu- und Ableitungen des Kühlfluids nicht zum Kühlraum. Der Kühlraum schließt sich an die Zuleitung des Kühlfluids an, reicht bis zur Ableitung und verläuft parallel zum Reaktionsraum. Trotzdem kann es auch in den Zu- und/oder Ableitungen zu einer Wärmeaufnahme durch das Kühlfluid kommen, also eine Senkung der Temperatur im Reaktionsraum wobei die Temperatur des Kühlfluids erhöht wird. Der Kühlraum ist eine längliche Aushöhlung bzw. Kanal mit beliebigem Querschnitt.

Erfindungswesentlich ist die Struktur der Zuleitungen des Kühlfluids und/oder der Ableitung für das Kühlfluid innerhalb des erfindungsgemäßen Reaktors.
Erfindungsgemäß muss die Zuleitung des Kühlfluids mindestens eine Stromumkehr aufweisen, bevor sie parallel zu dem Reaktionsraum verläuft. Die Stromumkehr wird durch eine Kanal- und Säulenstruktur erzielt; dabei bedeutet Kanal, Kurzform für Kanalstruktur, eine längliche Aushöhlung parallel zu dem Reaktionsraum, beziehungsweise parallel zu der Strömungsrichtung im Reaktionsraum und Säule senkrecht dazu. Somit weist die Zuleitung des Kühlfluids mindestens einen Kanalbereich parallel zum Reaktionsraum, beziehungsweise parallel zu der Strömungsrichtung im Reaktionsraum und mindestens einen Säulenbereich senkrecht zum Reaktionsraum, beziehungsweise senkrecht zu der Strömungsrichtung im Reaktionsraum auf, die dem Kühlraum vorgeschaltet sind.
Die Säulenstrukturen bzw. Säulen sind Aushöhlungen, Bereiche und/oder Teile der Leitung des Kühlfluids, die zwei Kanalstrukturen oder Zu- oder Ableitung in und/oder aus dem Reaktor und/oder in und/oder den Kühlraum verbinden und so eine fluiddichte Leitung des Kühlfluids ermöglichen.
Die Kanalstruktur ist mittels Säulenstruktur mit dem Kühlraum verbunden, so dass eine Stromumkehr des Kühlfluids erfolgt. Die Verbindung zwischen Kühlraum und Zuleitung wird durch die mindestens eine Säulenstruktur, bzw. ausgehend von dem Eintritt des Kühlfluids durch die letzte Säulenstruktur hergestellt.
Die Strömungsumkehr in der Zuleitung des Kühlfluids ist mithin wichtig für die Temperaturerhaltung im Reaktor. Durch die Strömungsumkehr wird das Kühlfluid langsamer erwärmt, d.h. es wird räumlich entfernter von der Reaktion erwärmt. Bei einer schnellen Erwärmung würde das Kühlfluid der Reaktion zu viel Energie entnehmen, so dass diese zum Erliegen käme.
In einer Alternative sind die mindestens zwei Zuleitungen nacheinander bezüglich der Strömung im Reaktionsraum angeordnet.

Der Reaktor weist eine druckstabile Reaktorhülle auf. Druckstabil im Sinne der Erfindung wird definiert als Reaktorhülle, die ohne Beschädigung auch hohe Drucke aushält. Im Sinne der Erfindung wird ein hoher Druck als 5 - 100 bar definiert, bevorzugt 10 - 50, besonders bevorzugt 20 - 40, insbesondere ca. 30 bar mit Schwankungen Werte von jeweils 20%, bevorzugt 10%, besonders bevorzugt 5%, insbesondere 3%.

Ferner sind in einer Alternative Reaktionsraum, Kühlraum und/oder Zu- und Ableitungen ebenfalls druckstabil.

Eine Ausführung des Reaktors weist mindestens eine der mindestens zwei Zuleitungen für das Kühlfluid auf mit mindestens jeweils zwei übereinander gefaltete Kanal- und Säulenstrukturen mit Stromumkehr.
Dabei kann die erste Zuleitung (erste bezüglich der Strömungsrichtung im Reaktorraum) mindestens zwei übereinander gefaltete Kanal- und Säulenstrukturen besitzen und die zweite oder weitere Zuleitungen lediglich eine übereinander gefaltete Kanal- und Säulenstruktur. In einer weiteren Alternative besitzt die erste Zuleitung eine übereinander gefaltete Kanal- und Säulenstruktur und die zweite oder jede bzw. eine der weiteren Zuleitungen zwei übereinander gefaltete Kanal- und Säulenstrukturen. In einer weiteren Alternative ist jede beliebige Kombination möglich. In einer Alternative haben alle Zuleitungen die gleiche Anzahl von übereinander gefalteten Kanal- und Säulenstrukturen.

Die mindestens zwei Zuleitungen für das Kühlfluid können mithin auch zwei oder mehrere Strömungsumkehrungen aufweisen, also im Falle von zwei Strömungsumkehrungen besitzt die Zuleitung zwei Kanal-Bereiche und zwei Säulen-Bereiche, bevor sie in den Kühlraum mündet.

In einer weiteren Ausführung weist der Reaktor mindestens eine Ableitung für das erwärmte Kühlfluidum auf mit mindestens einer übereinander gefalteten Kanal- und Säulenstruktur mit Stromumkehr.
Die Ableitung für das Kühlfluid ist somit ebenso gestaltet wie die Zuleitungen, d.h. sie weist mindestens eine Strömungsumkehr auf, also einen Kanal-Bereich und einen Säulen-Bereich. Die Ableitung kann jedoch auch zwei oder mehrere Strömungsumkehrungen aufweisen.

Der erfindungsgemäße Reaktor kann in einer Ausführung jede beliebige Kombination von Zuleitungen und Ableitungen bezüglich ihrer Kanal- und Säulenstruktur aufweisen. Bevorzugt haben die mindestens zwei Zuleitungen jeweils zwei Kanal- und Säulen-Bereiche, die mindestens einen Kanal- und Säulen-Bereich.

Die Ausgestaltung der Zu- und Ableitungen für das Kühlfluid mit mindestens einer übereinander gefalteten Kanal- und Säulenstruktur mit Stromumkehr, also Umlenkung der Stromrichtung, erleichtert einerseits die Bauweise des Reaktors und stellt ferner sicher, dass das Katalysatorbett bis ans Reaktorende gleichmäßig gekühlt wird. Insbesondere da bei Schichtung mehrerer Ebenen aus Reaktionsräumen und Kühlräumen seitliche Abzweige benötigt werden, die immer einen Kreuzstromanteil enthalten.

Durch die Strömungsumkehr bzw. Strömungsumlenkung kommt es zu einer Überlappung von Gleichstrom und Gegenstrom bezüglich der Strömung des Reaktionsgases.

Die mindestens zwei Zuleitungen sind in einer Ausführung im Bereich der ersten Hälfte des Reaktionsraums angeordnet.
Da der Reaktionsraum als längliche Aushöhlung bzw. Kanal mit beliebigem Querschnitt ausgeformt ist, ist seine Länge wohl definiert. Als erste Hälfte wird jene Hälfte bezeichnet, in welcher sich die Öffnung zum Eintritt des mindestens einen Reaktanden befindet. Im Bereich der ersten Hälfte des Reaktionsraums bedeutet im Sinne der Erfindung, dass:
1. der Reaktionsraum durch eine fluiddichte Wand, also eine fluid-impermeable Schicht von dem Kühlraum getrennt ist, somit
2. Reaktorraum und Kühlraum parallel angeordnet sind und damit auch die Länge des Kühlraums definiert ist, sowie
3. die Säulenstruktur, welche die restliche Zuleitung mit dem Kühlraum verbindet jeweils in der ersten Hälfte des Kühlraums angeordnet ist.
Erste Hälfte des Kühlraums entspricht somit ersten der Hälfte des Reaktionsraums, da beide parallel angeordnet sind; der absolute Wert der Länge muss jedoch nicht identisch sein.

In einer weiteren Ausführung besitzen die mindestens zwei Zuleitungen und/oder die mindestens eine Ableitung im Bereich der übereinander gefalteten Kanal-und Säulenstrukturen mit Stromumkehr unterschiedliche Querschnitte bezüglich Form und/oder Fläche. In einer Alternative unterscheiden sich die Zu- und Ableitungen untereinander im Querschnitt. In einer anderen Alternative unterscheiden sich einzelne Bereiche einer oder mehrerer Zu- und Ableitungen im Querschnitt. In einer weiteren Alternative sind sämtliche Kombination und Mischformen der oben genannten Alternativen möglich.

Eine Ausführung betrifft einen Reaktor bei dem mindestens eine Zuleitung in mindestens einer Kanal-und/oder Säulenstrukturen Sinterphasen, Sintermetalle, Fasern, Zylinder und/oder Ronden aufweist. Sinterphasen und/oder Fasern sind bevorzugt aus wärmeleitfähigem metallischem oder keramischem Material mit geringem Strömungswiderstand. Zylinder und/oder Ronden sind aus inertem Material. Diese Integration von Zusatzmaterial hat die Aufgabe flüssige Bestandteile des Kühlfluids zurückzuhalten bzw. die Verdampfungsqualität zu erhöhen.

In einer Ausführung befindet sich mindestens ein Katalysator in dem Reaktionsraum, das heißt der Reaktionsraum ist mit mindestens einem Katalysator beladen. Als wesentliche Vertreter für die Methanisierung sind hier die aktiven Elemente Ru, Ir, Rh, Ni, Co, Os, Pt, Fe, Mo, Pd und Ag zu nennen. Falls ein Trägermaterial für die aktiven Komponenten zum Einsatz kommt, kann dies ein Vertreter oder eine Mischung von TiO₂, Al₂O₃, YSZ oder SiO₂ sein.

Eine weitere Ausführung betrifft einen Reaktor der nach der Ableitung ein Reaktorteil mit Gegenstromkühlung mit mindestens einer Zuleitung für das Kühlfluid mit mindestens einer übereinander gefalteten Kanal- und Säulenstruktur mit Stromumkehr aufweist. Erfindungsgemäß bilden die Reaktorteile des erfindungsgemäßen Reaktors einen gemeinsamen Reaktionsraum und/oder Kühlraum.
In einer solchen Alternative ist die mindestens eine Ableitung nicht am Ende des Kühlraums angebracht. Ausgehend von der Strömungsrichtung im Reaktorraum weist der Kühlraum mindestens eine weitere Zuleitung mit mindestens einer Kanal- und Säulenstruktur auf die hinter der Ableitung ist.

In dieser Alternative liegt mithin folgende Anordnung im Reaktor vor, ausgehend von dem Eintritt der Reaktanden in den Reaktionsraum:
Im Bereich des Eintritts der Reaktanden in den Reaktionsraum befinden sich in dessen ersten Hälfte die mindestens beiden Zuleitungen. In Strömungsrichtung der Reaktanden bzw. des auch schon gebildeten Produktes ist die Ableitung des Kühlfluids angebracht. Der Strömungsrichtung im Reaktionsraum folgend befindet sich mindestens eine weitere Zuleitung, ebenfalls mit mindestens einer Kanal- und Säulenstruktur, für das Kühlfluid. Zwischen dieser Zuleitung und der Ableitungen fließt das Kühlfluid folglich im Gegenstrom bezüglich der Strömung im Reaktionsraum.
Der Reaktor, enthaltend einen zweiten Teil, in welchem das Kühlfluid im Gegenstrom geführt wird, kann in diesen Teil eine eigene Ableitung für das Kühlfluid besitzen oder das Kühlfluid wird, wie oben beschrieben, bis zur Ableitung des Kühlfluids des ersten Teils geführt.

Durch die Lage der mindestens zwei Zuleitungen für das Kühlfluid in der ersten Hälfte der Reaktorlänge steigt einerseits der Gesamtwärmewiderstand zwischen Verdampfungszone und Katalysator an, so dass kein "Ausblasen" der Reaktion stattfindet. D.h. die Reaktion kommt nicht zum Erlöschen aufgrund zu großer Temperaturabsenkung. Auch wird die Verdampfung an den Hotspots entlang der Reaktionsachse an der jeweiligen Einspeisezelle selbstregelnd reduziert. Existiert nach der Ableitung des Kühlfluids eine weitere Zuleitung am Reaktorende kann durch die Gegenstromführung von Kühlfluid und Reaktion noch ein Reaktionsraum mit niedriger Reaktionstemperatur erzeugt werden, in dem günstige thermodynamische Randbedingungen für einen Umsatz von CO₂ über 70% erreicht werden können. In einer Alternative können, von dem Eintritt der Reaktanden in den Reaktionsraum begonnen, entlang der Gleichstromführung und der Gegenstromführung unterschiedliche Katalysatoren verwendet werden. Als wesentliche Vertreter für die Methanisierung in beiden Stromführungsbereichen sind hier die aktiven Elemente Ru, Ir, Rh, Ni, Co, Os, Pt, Fe, Mo, Pd und Ag zu nennen. Falls ein Trägermaterial für die aktiven Komponenten zum Einsatz kommt, kann dies ein Vertreter oder eine Mischung von TiO₂, Al₂O₃, YSZ oder SiO₂ sein. Die verwendeten Katalysatormaterialien können identisch oder verschieden sein, sich jedoch hinsichtlich der Aktivität bezüglich der Temperatur unterscheiden. Im Bereich der Gegenstromführung sind dabei die Eigenschaften des Katalysatormaterials beispielsweise durch hohe Dispersion oder hohe Oberfläche auf höhere Aktivität bei niedrigerer Temperatur optimiert.

Dies ist meist gleichbedeutend mit einer geringeren Temperaturstabilität.

In einer Ausführung der vorliegenden Erfindung erfolgt die Herstellung von Kohlenwasserstoffe, bevorzugt die Methanisierung in zwei sequentiellen, getrennten erfindungsgemäßen Reaktoren, bevorzugt Mikroreaktoren, die in Serie sind.
In einem ersten Reaktor erfolgt die Konvention von im Wesentlichen CO im darauffolgenden Reaktor die Konvention von im Wesentlichen CO₂. Die beiden Reaktoren sind mit unterschiedlichen Katalysatoren beladen. Als wesentliche Vertreter für die Methanisierung in beiden Reaktoren sind hier die aktiven Elemente Ru, Ir, Rh, Ni, Co, Os, Pt, Fe, Mo, Pd und Ag zu nennen. Falls ein Trägermaterial für die aktiven Komponenten zum Einsatz kommt, kann dies ein Vertreter oder eine Mischung von TiO₂, Al₂O₃, YSZ oder SiO₂ sein. Die verwendeten Katalysatormaterialien können identisch oder verschieden sein, sich jedoch hinsichtlich der Aktivität bezüglich der Temperatur unterscheiden. Im zweiten Reaktor sind dabei die Eigenschaften des Katalysatormaterials beispielsweise durch hohe Dispersion oder hohe Oberfläche auf höhere Aktivität bei niedrigerer Temperatur optimiert. Dies ist meist gleichbedeutend mit einer geringeren Temperaturstabilität.

In einer bevorzugten Ausführung ist der fluide Reaktand ein Wasserstoff sowie Kohlenstoffmonoxid und/oder Kohlenstoffdioxid enthaltendes Fluid oder besteht daraus. Nebenbestandteile können außerdem N₂ oder Wasserdampf sein.

In einer Ausführung der vorliegenden Erfindung enthält der Reaktor auf der dem Kühlraum gegenüberliegenden Seite des Reaktionsraums Heizelemente. Bevorzugt sind die Heizelemente runde Patronen oder flache Platten aus temperaturbeständigem Edelstahl mit einer Füllung aus MgO zur Isolation des Heizleiters. Der Heizleiter besteht dabei aus einer Widerstandslegierung.

In einer Ausführung liegt der erfindungsgemäße Reaktor in Sandwich-Bauweise vor, d.h. er besteht aus mehreren, übereinander gelagerten und miteinander fluiddicht verbundenen Schichten oder Lagen.
In einer Alternative sind die Schichten bzw. Lagen nicht eben, sondern gekrümmt und bilden eine Mantelfläche im Sinne eines Hohlzylinders. Die einzelnen Schichten sind dann ineinandergefügt, im Falle von Hohlzylinder bevorzugt konzentrisch. Ein kreisförmiger Querschnitt ist jedoch nicht unbedingt erforderlich, sondern der Querschnitt kann auch jede andere beliebige Form aufweisen.

In einer weiteren Alternative sind die Schichten bzw. Lagen des erfindungsgemäßen Reaktors in Sandwich-Bauweise eben, also nicht gekrümmt. In radialer Richtung liegt folgender Aufbau vor:
Die Basis wird gebildet von einer Platte, die Heizelemente enthält. Darüber befindet sich eine zweite Platte. Diese weist auf der unteren Seite, also zur Platte enthaltend Heizelemente hin, Kanäle oder Schlitze auf, die den Reaktionsraum bilden. Darüber, auf der oberen Seite der Platte, sind Kanäle bzw. Schlitze, die den Kühlraum bilden. Die in radialer Richtung darauf folgende Platte besitzt mindestens zwei Säulenstrukturen, also durchgehende Bohrungen, die in den Kühlraum münden. Auf der Oberseite der Platte sind zwei Kanalstrukturen angebracht, jeweils ausgehend von einer Säulenstruktur. Diese mindestens zwei Kanal- und Säulenstrukturen befinden sich im Bereich der ersten Hälfte des Reaktionsraums. In der zweiten Hälfte, zum Ende des Reaktionsraums, befindet sich eine analoge Säule und Kanalstruktur, welche die Ableitung bildet. Diese bilden die Zuleitung des Kühlfluids. In der radialer Richtung darauf folgende Platte befinden sich überhalb dem der Säulenstruktur gegenüberliegenden Ende der Kanalstruktur jeweils ein Anschluss für die Zu- bzw. Ableitung des Kühlfluids.
In einer weiteren Alternative sind unterhalb der letzten Platte mit den Anschlüssen für das Kühlfluid mindestens eine weitere Platte mit Säulen und Kanalstruktur, um eine Umlenkung des Kühlfluids zu erreichen. Diese weiteren Platten können Säulen und Kanalstrukturen nur für eine Zuleitung und/oder Ableitung besitzen, oder aber ggf. auch für mehrere Zuleitungen.
Die darauf folgenden Ebenen weisen denselben Aufbau von Kanal und Säulenstrukturen auf, jedoch so versetzt, dass jeweils eine Umleitung des Kühlfluids bezüglich der Strömungsrichtung stattfindet. Der Aufbau für Zu- und Ableitungen des Kühlfluids ist analog. Allerdings können die Zuleitungen mehr Umlenkungen aufweisen, als die Ableitungen des Kühlfluids. Entsprechend weisen dann die sich an die dritte Platte anschließenden Platten Säulen- und Kanalstrukturen für die Zuleitung auf, aber lediglich Säulenstrukturen für die Ableitung. Als jeweils letzte Platte weist der Mikroreaktor eine Platte mit durchgehenden Bohrungen und Anschlüssen für die Zu- und Ableitung des Kühlfluids (Wasser) auf, gegebenenfalls versehen mit Ventilen. Erfindungsgemäß liegen mindestens zwei Zuleitungen und eine Ableitung vor.

In einer weiteren Alternative ist ein analoger Plattenaufbau auch in die entgegengesetzte, radiale Richtung möglich, ausgehend von derselben Platte enthaltend Heizelemente. Mit anderen Worten, der in radialer Richtung beschriebene Aufbau wird an der zentralen Platte enthaltend Heizelemente gespiegelt.
Bei einem an der zentralen Platte spiegelbildlich angeordneten Aufbau enthält der Mikroreaktor somit senkrecht zur zentralen Platte mindestens zwei Reaktionsräume und die entsprechenden Kühlräume, da der Aufbau in beide Richtungen senkrecht zur zentralen Platte erfolgt. Innerhalb einer Ebene befinden sich mindestens zwei, bevorzugt 2 oder 3 Reaktionsräume und Kühlräume, so dass der Mikroreaktor insgesamt mindestens vier (oder entsprechen 6) Reaktionsräume mit den dazugehörenden Kühlräumen aufweist.

In einer weiteren Alternative befindet sich nach der Ableitung für das Kühlfluid auf dem Kühlraum in Richtung der Strömung im Reaktionsraum noch mindestens eine weitere Zuleitung für das Kühlfluid, welches dann im Gegenstrom den Reaktionsraum kühlt.

Alle Kanalstrukturen sowie Kanäle für Reaktionsraum und Kühlraum sind in radialer Richtung bevorzugt übereinander angeordnet.

Die einzelnen Platten, bzw. Lagen und Schichten des Reaktors sind fluid- und druckdicht miteinander verbunden. Dies ist z.B. je nach Material durch Laserschweißen, Diffusionsschweißen, Elektronenstrahl- oder Reibschweißen jeglicher Art, Zusammenschrauben oder Kleben und gegebenenfalls Abdichten möglich.

Die einzelnen Schichten sind aus folgenden Materialien: Edelstähle oder Nickelbasislegierungen, bevorzugt 1.4301, 1.4404, 1.4571 und 1.4876 oder 1.4958/9 und 2.4816. Als weitere Materialien oder Alternativen werden hitzebeständige Kunststoffe, wie z.B. Teflon oder auch Glas, Glasfaser oder Karbonfaser eingesetzt.

Die Schlitze, Kanäle bzw. Säulen- und Kanalstrukturen werden mit dem Fachmann bekannten Mittel in den jeweiligen Platten hergestellt, wie z.B. Bohrungen, Fräsen, nasschemisches Ätzen oder Laserschneiden, Drahterosion oder Techniken aus der Halbleiterherstellung.

Im Falle von Mikroreaktoren, insbesondere aus Silizium werden auch Techniken bekannt aus der Herstellung von Halbleitern eingesetzt, insbesondere Fotolithografie.

Für unterschiedliche Platten können auch unterschiedliche Materialien eingesetzt werden.

In einer Ausführung der vorliegenden Erfindung handelt es sich dabei um einen Mikroreaktor.
Mikroreaktor im Sinne der vorliegenden Erfindung bedeutet ein Reaktionsraum mit einer Höhe von 0,1 - 10 mm, bevorzugt 0,2 - 5 mm, besonders bevorzugt 0,5 - 3 mm, einer Breite von 1-60 mm, bevorzugt 1,5 - 50 mm, besonders bevorzugt 2-40 mm und einer Länge von 1 bis 40 cm, bevorzugt 5-30 cm, besonders bevorzugt ca. 10 cm; bevorzugt mit einem Querschnitt von 2 x 40 mm. Die Höhe der Kühlkanäle beträgt von 0,01 - 10 mm, bevorzugt 0,05 - 5 mm, besonders bevorzugt 0,1 - 2 mm, insbesondere 0,5 mm; die strukturierte Breite entspricht der Breite des Reaktionsraums. Bevorzugt weisen die Kanal- und/oder Säulenstrukturen eine Höhe und eine Breite vom jeweils 1 mm, insbesondere jeweils 0,5 mm auf..
In einer Ausführung der vorliegenden Erfindung sind die Reaktorwände zwischen Reaktionsraum und Kühlraum bzw. zwischen den Umlenkungen des Kühlfluids, insbesondere eines Mikroreaktors, 0,1 bis 5 mm dick, bevorzugt 0,1 bis 3 mm, besonders bevorzugt 0,1 bis 2 mm. Die Wände innerhalb des (Mini-)Reaktors zwischen den Umlenkungen des Kühlfluids haben bevorzugt eine Dicke von 1 mm, insbesondere 0,5 mm.

Die umschließenden Reaktorwände sind typischerweise 2 bis 10 mm, bevorzugt 5 mm dick.

In einer Ausführung der vorliegenden Erfindung wird der Reaktor aus einem einzigen Block aufgebaut, der allerdings alle wesentlichen Merkmale wie Reaktorraum, Kühlraum, Kanal- und Säulenstruktur sowie Anschlüsse für Zu- und Ableitungen aufweist. Dies ist z.B. durch den Einsatz von 3D-Druckern möglich.

In einer weiteren Alternative ist der Reaktor fluid- und druckdicht und weist gegebenenfalls keine Reaktorhülle auf.

Eine zusätzliche Ausführung betrifft den erfindungsgemäßen Reaktor, der fluiddicht mit einer vorgeschalteten Elektrolysevorrichtung verbunden ist. Gegebenenfalls ist die Elektrolysevorrichtung und der oder die erfahrungsgemäßen Reaktoren zusätzlich mit Wärmetauschen Fluid- und/oder Druckdicht verbunden, so dass ein geschlossenes System zur Erzeugung und/oder Speicherung von Energien in Kohlenwasserstoffen vorliegt. In dieses System muss lediglich Energie zur Elektrolyse, CO₂ und gegebenenfalls Wasser eingespeist werden.

Ein weiterer Gegenstand der vorliegenden Erfindung ist somit ein System bzw. eine Vorrichtung zur Erzeugung und/oder Speicherung von Energien in Kohlenwasserstoffe, insbesondere Methan, das wie folgt aufgebaut ist:
Eine Vorrichtung für eine Hochtemperatur-Elektrolyse wird mit Strom versorgt und weist Zuleitungen für die Edukte der HT-Elektrolyse: H2O und CO2 auf. Als Hauptprodukte der Elektrolyse werden Wasserstoff, Kohlenstoffdioxid und Sauerstoff gebildet. Als Nebenprodukte sowie Reste von Edukte werden neben den zuvor genannten Hauptprodukten auch CO2 und H2O aus der Elektrolysevorrichtung abgeführt. Sauerstoff O2 wird abgetrennt. In mindestens einem Wärmetauscher wird O2 abgekühlt, dabei wird CO2 als Edukt für die HT-Elektrolyse vorgewärmt.

Die weiteren Produkte H2, CO sowie nicht verbrauchte Produkte CO2 und H2O werden ebenfalls in mindestens einen Wärmetauscher geleitet. In diesem wird ebenfalls CO2 als Edukt für die HT-Elektrolyse vorgewärmt.

Die Produkte H2 und CO sowie nicht verbrauchte Edukte CO2 und H2O aus der Elektrolyse werden gegebenenfalls nach einem ersten Wärmetauscher in einen zweiten geleitet. Darin wird Wasser vorgewärmt, welches als Kühlfluid in dem erfindungsgemäßen Reaktor eingesetzt wird. Nach dem Durchlauf des zweiten Wärmetauschers für die Produkte der HT-Elektrolyse H2 und CO (sowie die Nebenprodukte und die nicht verbrauchten Edukte CO2 und H2O) erfolgt eine Gas-Flüssigtrennung. Das abgetrennte flüssige Wasser wird in den zuletzt genannten Wärmetauscher geleitet und dort mit dem übrigen Wasser als Kühlfluid für den erfindungsgemäßen Reaktor vorgewärmt. Die gasförmige Phase wird in einem weiteren Wärmetauscher geleitet. Darin wird H2 und CO sowie nicht verbrauchtes CO2 und evtl. auch verbliebener Wasserdampf vorgewärmt, bevor diese als Edukte in den erfindungsgemäßen Reaktor eingeleitet werden. Vorgewärmt werden sie durch das heiße, feuchte Methan aus dem bzw. den erfindungsgemäßen Reaktoren.
In dem erfindungsgemäßen Reaktor wird CO und H2 zu Methan CH4 und H2O reagiert. In dem Reaktor wird mindestens ein Teil des CO2 und H2 nicht umgesetzt. Das CO2 kann ganz oder teilweise abgetrennt werden und als Edukt in der HT-Elektrolyse eingesetzt werden. Das Produkt des erfindungsgemäßen Reaktors, also insbesondere CH4, H2O aber auch nicht umgesetztes CO2 und welches auch nicht abgeleitet wurde, sowie nicht umgesetztes H2 kann in einer Alternative in einen weiteren erfindungsgemäßen Reaktor geleitet werden. Dort findet eine Methanisierung von CO2 mit H2 statt. Dabei wird weiteres Methan und Wasser gebildet. In einer anderen Alternative wird ein erfindungsgemäßer Reaktor eingesetzt, der nach der Ableitung einen Reaktorteil mit Gegenstromkühlung aufweist. In diesem zweiten Teil mit Gegenstromkühlung findet dann entsprechend die CO2-Methanisierung statt.
In der ersten Alternative kann in dem zweiten, in Serie geschalteten Reaktor ebenfalls eine Gegenstromkühlung vorliegen. Verbleibendes CO2 aus dem zweiten Reaktor kann ebenfalls als Edukt der HT-Elektrolyse zugeführt werden. Das heiße, feuchte Methan wird in einem zuvor beschriebenen Wärmetauscher geleitet, in welchem die Produkte der HT-Elektrolyse als Edukte der Methanisierung vorgewärmt werden. Nach diesem Wärmetausch erfolgt eine Gas-Flüssigtrennung. Das gasförmige, trockene Methan wird aus dem System bzw. Vorrichtung abgeleitet und gespeichert oder evtl. zur Energiegewinnung eingesetzt. Die verbleibende flüssige Phase, also Wasser, wird jenem Wärmetauscher zugeführt, der das Wasser als Kühlfluid für die Methanisierung vorwärmt durch die Wärme der Produkte der HT-Elektrolyse.

Gegenstand der vorliegenden Erfindung ist auch die Verwendung des Reaktors in einem Verfahren zur Herstellung von Kohlenwasserstoffen, bevorzugt Methan, bzw. die Verwendung des Reaktors zur Herstellung von Kohlenwasserstoffen, bevorzugt Methan.

Ferner ist Gegenstand der Erfindung ein Verfahren zum Betreiben eines erfindungsgemäßen Reaktors.

In einer Ausführung wird das erfahrungsgemäße Verfahren im Wesentlichen in einem autothermen Betrieb durchgeführt.

Im Sinne der Erfindung bedeutet im Wesentlichen autotherm, dass der Gesamtprozess, also das Gesamt-Herstellungsverfahren von Kohlenwasserstoffen (Methan) unabhängig von äußerer Wärmezufuhr ist; die Energie der exothermen Reaktionen wird mithin endothermen Reaktionen bzw. direkt der Erzeugung gasförmigen Kühlfluids zur Verfügung gestellt. Im Wesentlichen bedeutet das mindestens 60%, bevorzugt mindestens 70%, besonders bevorzugt mindestens 80% des Energiebedarfs des Gesamtprozesses ohne äußere Wärmezufuhr gedeckt ist. In einer Alternative wird der Reaktionsraum mittels Heizelementen vor Unterkühlung und damit Erlöschen der Reaktion bewahrt. Mithin können die Heizelemente ausschließlich zur Vorwärmung genutzt werden.

Die erfindungsgemäße Herstellung von Kohlenwasserstoffen, bevorzugt Methanisierung erfolgt unter Druck, bevorzugt 2 bis 30 bar, besonders bevorzugt 4- 8 bar. So kann die Bildung von Koksnebenprodukt vermindert und das erzeugte Methan einfacher gereinigt und gespeichert werden. Dies gilt insbesondere, wenn sowohl CO₂ als auch Wasserdampf, die Ausgangsstoffe der Elektrolyse unter Druck vorliegen.
In einer Ausführung wird das Kühlfluid mit einem Druck von 5 - 100 bar, bevorzugt 10 - 50, besonders bevorzugt 20 - 40 bar, insbesondere 30 bar zugeleitet.

Ein kostengünstiges Verfahren kann durch die Verwendung von Wasser zur Kühlung der exothermen Kohlenwasserstoffbildung, insbesondere Methanisierung erreicht werden. Das so erhitzte Wasser bzw. der so gebildete Wasserdampf wird unmittelbar als Edukt bei der HT-Elektrolyse in einer SOEC (Solid Oxide Electrolysis Cell) verwendet. In einer Ausführung handelt es sich bei dem Kühlfluid mithin um Wasser. In einer Alternative handelt es sich um Wasserdampf, in einer anderen Alternative um überhitzten Dampf. Erfindungsgemäß umfasst der Begriff Wasser ebenso Wasserdampf, sowohl Nass- als auch Trockendampf, aber auch überhitzter Dampf und überkritischer Dampf, sowie trockengesättigter Dampf. Gegebenenfalls liegt das Kühlfluid in Abhängigkeit von Temperatur und Druck in einem oder mehreren diesen Formen im Reaktor vor oder geht von einer in die andere Form über. In einer Ausführung allgemein ein Kühlfluid eingesetzt das mindestens einen Phasenwechsel durchläuft.

Um eine Siedetemperatur von Wasser als Kühlfluid von 350°C zu erreichen, müsste in dem Kühlsystem, also in den Zuleitungen des Kühlfluids und in dem Kühlraum ein Druck von ca. 164 bar herrschen, was das Verfahren und den Reaktor sehr aufwendig und kostspielig machen würde.
Hohe Drucke stellen zunächst ein Risiko dar. Um eine Gefahr ausgehend von hohem Druck zu verringern, sind aufwendige Apparaturen und kostspielige Materialien notwendig, die hohen Drucken standhalten und auch langfristig keine Ermüdungserscheinungen zeigen.

Soll Wasserdampf im Prozess der Elektrolyse genutzt und damit geringfügig oberhalb des Reaktionsdruckes des Methanisierungsprozesses erzeugt werden, ist ein Druck von 10 - 40 bar ausreichend. Bei diesem Druck hat Wasser einen Siedepunkt von ca. 180 - 250°C. Eine solche Temperatur führt möglicherweise zum Erlöschen der Reaktion am Katalysator; eine zu dicke Wand zwischen dem Kühlfluid und des Reaktionsraumes allerdings zu einem Temperaturgradienten, der ebenfalls Hot-Spots erzeugt. Durch die erfindungsgemäße Strömungsumkehr des Kühlfluids in den Zuleitungen, also durch die erfindungsgemäße Kanal- und Säulenstruktur der Zuleitung, erfolgt eine Delokalisierung der Verdampfung, d.h. es erfolgt eine zeitliche und räumliche Verteilung des Kühlpotentials. Kommt es an einer Stelle zu einer Temperaturüberhöhung erfolgt die Verdampfung bevorzugt an dieser Stelle. Wandert die Temperaturerhöhung folgt die Verdampfungszone. So werden Hot-Spots über einen längeren Zeitraum an bestimmten Orten vermieden und eine Schädigung des Katalysators unterdrückt.

Im erfahrungsgemäßen Verfahren wird das Kühlfluid mit einer Temperatur von 0,1 - 30 Kelvin beziehungsweise Grad Celsius, bevorzugt 1 - 20, besonders bevorzugt 5 - 10 Kelvin unter Siedetemperatur des Kühlfluids zugeleitet.
In der Ausführung, in welcher Wasser als Kühlfluid verwendet wird, liegt die Temperatur somit bei ca. 150° C oder höher.
Die Einspeisemenge an Kühlfluid kann pro Zuleitung entsprechend dem des Aktivierungsgrads des Katalysators geregelt werden. Dabei erfolgt die Regelung durch Temperaturmessung an den jeweiligen Einspeisestellen. Überschreitet eine Temperatur die Zielvorgabe, wird der Volumenstrom erhöht und umgekehrt. Auf diese Weise lässt sich auch Desaktivierung im Katalysator beobachten und kompensieren.
Durch die Regelung der Einspeisemenge wird ein Ausblasen, Erlöschen der Reaktion am Reaktoranfang vermieden. Ebenso wird eine Hotspot-Bildung in den darauffolgenden Injektionsstellen vermieden. Erfindungsgemäß handelt es sich bei den Injektionsstellen um jene Stellen, an welchen die Zuleitungen des Kühlfluids in den Kühlraum stattfinden.

In einer weiteren Ausführung beträgt die Temperatur im Reaktionsraum/Katalysatorbett 100 - 800°C, bevorzugt 200 - 700°C, besonders bevorzugt 300 - 500°C. Insbesondere liegen im Reaktionsraum Bereiche unterschiedlicher Temperaturen vor, mit anderen Worten es liegt eine axiale Temperaturspreizung vor, mit Temperaturen von minimal 100°C bis maximal 800°C.
In einer Ausführung ist die Eintrittstemperatur des Reaktionsgases in den Reaktor zwischen 250 und 450 Grad Celsius, bevorzugt 300 und 400° C, insbesondere ca. 350° C mit Schwankungen von 10 %, bevorzugt 5 %, insbesondere 3 %. Schwankungen werden erfindungsgemäß als Abweichungen definiert, also eine Schwankung von 10 % bezüglich der bevorzugten Temperatur von 350° C bedeutet eine Temperatur zwischen 315 und 385° C.
Ferner beträgt die Temperaturdifferenz zwischen der Eintrittstemperatur des Reaktionsfluids und der Eintrittstemperatur des Kühlfluids in einer Alternative 10 - 300°C, bevorzugt 50 - 250°C, besonders bevorzugt 100 - 150°C.

In einer Ausführung erfolgt durch die Kühlung des Reaktors eine Erwärmung des Kühlfluids, um 20 bis 300° C, bevorzugt 100-200° C.

Bei Verwendung von Wasser beträgt mithin die Temperatur der Ableitung 400 bis 450° C, bei maximaler Temperaturspreizung axial im Katalysatorbett von 300 bis 500° C.

In einer weiteren Ausführung wird ein Abfallprodukt der Reaktion des Reaktionsraums als Kühlfluid eingesetzt.
In einer Alternative wird das sogenannte Reaktionswasser, also das Wasser welcher bei der Methanisierung als Nebenprodukt entsteht, zur Kühlung der Methanisierung verwendet. In einer Alternative ist dieses vorerwärmt durch Abkühlung von Edukten bzw. Abkühlung des Produktstroms.

In einer Ausführung werden mindestens zwei Reaktoren fluiddicht in Serie geschaltet, wobei der erste mittels Gleichstromführung, und der zweite mittels Gegenstromführung gekühlt werden.

Als Reaktanden wird in einer Alternative das Produkt einer HT-Elektrolyse, bevorzugt in einer SOEC, also ein Gasgemisch, enthaltend (als wesentliche) Bestandteile oder bestehend aus H2, CO und CO₂ als Reaktionsgas in den erfindungsgemäßen Reaktor eingeleitet.

Das erwärmte Kühlfluid aus dem oder den erfindungsgemäßen Reaktoren wird als Wasserdampf in der HT-Elektrolyse zugeführt.

In einer Ausführung kann der erfindungsgemäße Reaktor wie folgt betrieben werden: Ein Maximum von 450°C als Reaktortemperatur. Die Produkte verlassen den Reaktor mit einer Temperatur von 350 - 400°C. Die Reaktion findet bei einem Druck von 5 bar statt. Als HT-Elektrolyse wird eine SOEC (Solid Oxid Electrolysis Cell) eingesetzt. Die Elektrolyse erfolgt bei 730 - 850°C und erreicht eine Konversion von 60% CO2 und 70% H2O. Es erfolgt eine Einspeisung von CO2 zu H2O im Verhältnis von 0.2: 0.8 bis 0.1 : 0.9. Auch hier erfolgt die Elektrolyse unter einem Druck von 5 bar.

Die Einspeisung von CO2 erfolgt ebenfalls mit einem Druck von 5 bar. Einspeisung von Wasser unter Atmosphärendruck. CO2 und H2O werden bei einer Temperatur von ca. 20°C eingespeist. Das eingesetzte Kühlwasser hat eine Temperatur von 7 - 15°C.

Der erfindungsgemäße Reaktor und das Verfahren, insbesondere der erfindungsgemäße Betrieb des Reaktors zeigen folgende Vorteile:
Eine Umlenkung des Kühlfluids, also das Vorhandensein mindestens einer Kanal- und Säulen-Struktur am Reaktorausgang, also an der Ableitung des Kühlfluids für den erzeugten Dampf erleichtert die Bauweise bzw. stellt sicher, dass das Katalysatorbett bis ans Reaktorende gleichmäßig gekühlt wird, da bei einem Sandwichaufbau mehrerer Lagen seitliche Abzweige zur Medienver- oder -entsorgung am Reaktor immer einen Kreuzstromanteil erzwungener Maßen mit sich bringen.
Durch die Anzahl der Umkehrungen können die Position des Siedevorgangs in radialer Richtung zwischen den Ebenen verschoben werden und mit der getrennt gesteuerten Zufuhr des Kühlfluids (auch unterschiedliche Mengen sind so möglich) der Wärmestrom, der dem Katalysator entzogen wird, gezielt eingestellt werden. Auf diese Weise ist auch der Temperaturverlauf im Katalysatorbett in axialer Richtung gezielt einstellbar ohne die Reaktion zum Erlöschen zu bringen.
Dadurch erfolgt die oben erwähnte Untergliederung der Reaktionszone in verschiedene Bereiche durch unterschiedliche Längen der Kanalstrukturen und/oder Anzahl Umlenkungen, also Anzahl der Säulen-Strukturen zur Beeinflussung des Wärmeflusses und des Temperaturprofils in axialer Richtung.

Die Verwendung von Reaktionswasser zur Kühlung der Methanisierung - vorerwärmt durch Abkühlung von Edukt bzw. Produktstrom erspart Energieaufwand zur Bereitstellung von ionenfreiem Wasser.

Der Reaktor ist sehr kompakt (Außenmaß mindestens Faktor 10 kleiner) gegenüber Stand der Technik, und damit einsetzbar in mobilen, schlüsselfertigen Container- oder Skidbasierten Anlagen.
Durch Reduktion des Hot-Spots findet kaum Katalysatordeaktivierung statt und somit erfolgt auch eine deutlich Reduzierung der Gefahr des Verlöschens der Reaktion sowie wartungstechnische Vorteile (größere Wartungsintervalle).
Das Kühlfluid besitzt eine hohe Austrittstemperatur (ca. 400-450°C) und ist dadurch zur unmittelbaren Rückführung der Reaktionswärme in den HT-Elektrolyseprozess geeignet.
Das Verfahren zeigt eine geringe Limitierung bezüglich des CO₂-Umsatzes (geringer Reinigungsaufwand des synthetisch produzierten Methans) in Gemischen aus CO und CO₂ mit Wasserstoff, wie sie bei einer Co-elektrolyse von H₂O-Dampf und CO₂ zu H₂ und CO auftreten.
Ferner fallen lediglich geringe Kosten aufgrund geringer Katalysatordesaktivierung an. Durch die kompakte Bauweise ist ein extrem schnelles Aufheizen / Abkühlen gewährleistet, so dass ein dynamischer Betrieb mit Lastwechseln sehr einfach möglich ist. Dies ist insbesondere bei Nutzung von Überschussstrom von Vorteil.

Durch den Einsatz zweier in Serie geschalteter Reaktoren oder eines Reaktors mit Strömungsrichtung des Kühlfluids im Kühlraum im Gleich- und Gegenstrom zu der Stromführung im Reaktionstraum werden separate Zonen/Reaktoren für CO und CO₂-Umsetzung (CO wird präferiert an den gängigen Katalysatoren umgesetzt und CO₂ muss um Katalysatorzentren konkurrieren) zur Verfügung gestellt, mit der Möglichkeiten der Verwendung unterschiedlicher Katalysatoren in den beiden Reaktoren, d.h. zuerst einen Katalysator für CO-Umsetzung mit höherer Stabilität gegenüber Temperatur und Verkokung, dann in Folge einen Katalysator für die CO₂-Umsetzung mit höherer spezifischer Aktivität bei niedrigen Temperaturen bestehen.
Ein solcher Aufbau erlaubt auch den Einsatz unterschiedlich großer Reaktoren oder eines Reaktors mit unterschiedlich großen Zonen bzgl. der Bereiche in denen im Kühlraum ein Gleich- und Gegenstrom zu der Stromführung im Reaktionstraum vorliegt. Die Größe der Reaktoren oder Zonen richtet sich nach dem CO/CO₂-Verhältnis.
Mithin wird erfindungsgemäß nicht nur der Wärmefluss in radialer Richtung sondern auch das Temperaturprofil des Gesamtreaktors in axialer Richtung durch die Verschaltung beeinflusst. So wird durch Anhängen eines zweiten Reaktors beziehungsweise. Reaktorteils mit ggf. umgekehrter Strömungsrichtung ein Maximalwert der Temperatur im Kühlmedium an der Verbbindungsstelle der beiden Kühlmittelaustritte erreicht. Dies hat Vorteile bei der Nutzung des Kühlmittels für weitere Heizzwecke. Die Umkehr der Strömungsrichtung zwischen den Reaktoren beziehungsweise Reaktorsegmenten erlaubt die Kombination der Reduktion der Temperaturspitze im vorderen Bereich des ersten Reaktors durch die Einstellung des Wärmeübergangs in verschiedenen axialen Zonen bei Überhitzung des Dampfes gegen Ende des ersten Reaktors beziehungsweise Reaktorsegments. Im zweiten Reaktor beziehungsweise Reaktorsegment kann dann durch gezielte Abkühlung auf deutlich geringere Temperaturen durch den reinen Gegenstrombetrieb auch ein anderer Katalysator verwendet werden, um das thermodynamische Gleichgewicht in Richtung der Produkte der Reaktion zu verschieben.

Der erfindungsgemäße Reaktor und das Verfahren, insbesondere der erfindungsgemäße Betrieb des Reaktors finden Verwendung in der Erdgasindustrie/Stromindustrie: zur Erzeugung von synthetischem Erdgas (SNG) für die Einspeisung ins Erdgasnetz oder für Erdgastankstellen mittels Überschussstrom.
Ferner können CO₂-Emittenten genutzt werden, die Reaktanden zur Verfügung stellen: Nutzung der Emissionen (beispielsweise aus Biogas oder in der Zementindustrie oder in BHKWs) zur Erzeugung von synthetischem Erdgas (SNG) mittels Überschussstrom. Außerdem kann so Überschussstrom gespeichert werden und Überkapazitäten an Strom im Leitungsnetz werden vermieden.

Die Vorteile der erfindungsgemäßen Vorrichtung bzw. System zur Erzeugung und/oder Speicherung von Energie in Kohlenwasserstoffen liegt in einer maximalen Rückgewinnung der Wärme aus jedem Operationsschritt, einer geringen Temperatur der Heizquelle, die zur Stabilisierung des Systems eingesetzt wird. Diese liegt bei unter 300°C. Ferner wird eine Optimierung des Verhältnisses von CO₂ zu H2 für die Methanisierung erreicht. Außerdem ist nur ein Minimum an Aufreinigung des produzierten Methans notwendig. Weitere Vorteil des erfindungsgemäßen Systems bzw. Vorrichtung ist ein nahezu autothermes Verfahren, in welches nur gegebenenfalls wenig Wasser eingespeist werden muss. Somit wird auch der Wasserverbrauch auf ein Minimum reduziert.

Im Folgenden werden einzelne Ausführungen der vorliegenden Erfindung durch Figuren beschrieben. Diese sollen allerdings den Gegenstand der Erfindung nicht einschränken, sondern lediglich einzelne Ausführungen oder Alternativen darstellen.
Fig. 1:

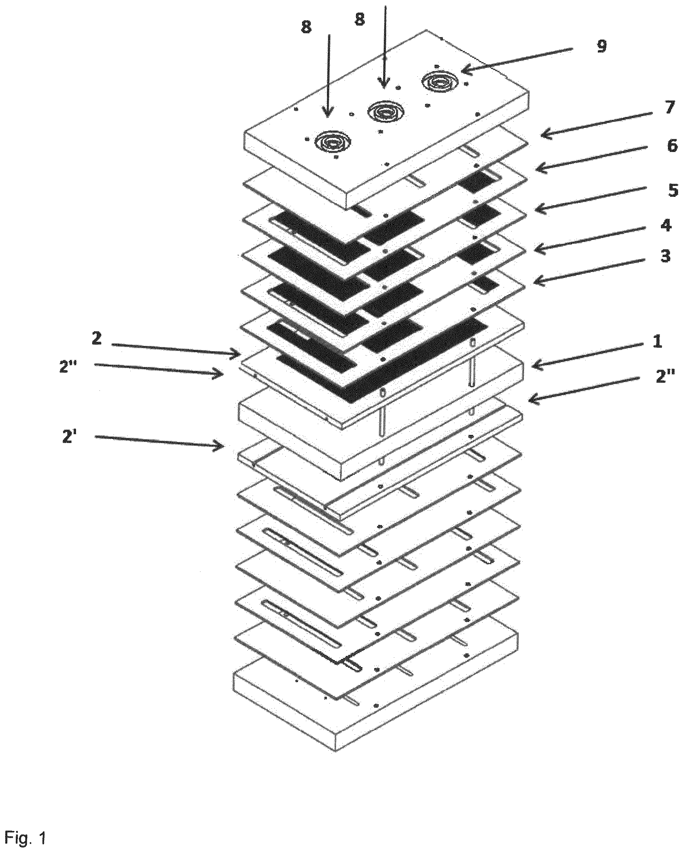

   Figur 1 zeigt den Aufbau eines Reaktors aus einzelnen Platten (Lagen, Schichten). Ausgehend von einer zentralen Platte 1, die gegebenenfalls mit Heizelementen versehen ist, erfolgt der Aufbau durch unterschiedliche Platten in beide Richtungen spiegelsymmetrisch. Mithin sind die Platten 2 und 2' spiegelsymmetrisch und weisen auch dieselben Merkmale spiegelsymmetrisch auf. Analog dazu erfolgt der Aufbau des erfindungsgemäßen Reaktors mit den weiteren Platten 3, 4, 5, 6, 7, die auch in die andere entgegengesetzte Richtung spiegelsymmetrisch fortgesetzt wird. Die Platte 2 enthält durchgehende Schlitze auf der unteren Seite, also zur zentralen Platte hin. Analoge Schlitze 2" sind auf der unteren Platte 2' zu finden. Durch diese Schlitze 2" kann nach erfolgter Schweißung des Stapels ein Draht gezogen werden und das Material zwischen zwei Schlitzen auf der jeweiligen Platte 2 oder 2' mittels Drahterosion zur Erzeugung des Reaktionsraumes entfernt werden. Die zentrale Platte bildet den Deckel für den Reaktionsraum. Die Platten der ersten Lage 2 und 2' haben auf der von der zentralen Platte entfernt liegenden Seite weitere Schlitze, die mit der darauf folgenden Platte 3, 3' abgedeckt werden und den Kühlraum bilden.
   Im Folgenden erfolgt der Aufbau nach oben durch weitere Platten 4-7, die die Kanal- und Säulenstrukturen, gebildet durch Schlitze und Bohrungen aufweisen. Die letzte Platte hat Anschlüsse für die Zuleitung des Kühlmediums 8 sowie für dessen Ableitung 9. Ein entsprechender spiegelsymmetrischer Aufbau erfolgt von der zentralen Platte nach unten, wie auf Abbildung deutlich wird.
Fig. 2:

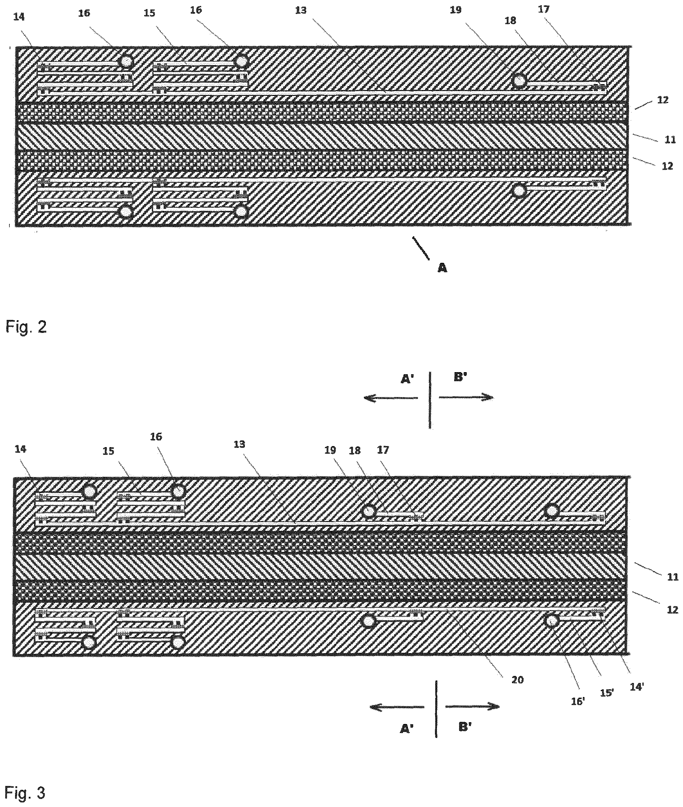

   In Figur 2 ist ein erfindungsgemäßer Reaktor im Querschnitt dargestellt. Ausgehend von einer zentralen Platte 11, liegen nach oben und unten spiegelsymmetrisch Reaktionsräume 12 vor. Darüber befindet sich jeweils ein Kühlraum 13. Die Zuleitung 16 des Kühlfluids ist durch eine übereinander gefaltete Kanal- 15 und Säulen- 14 Struktur gekennzeichnet. Im vorliegenden Fall zeigt die Zuleitung drei dieser übereinander gefalteten Strukturen. Die Ableitung des Kühlfluids 19 erfolgt in dieser Alternative ebenfalls über eine Kanal- 18 und Säulen- 17 Struktur.
Fig. 3:
   In Figur 3 wird in einem die Ausführung beschrieben, in welcher der erfindungsgemäße Reaktor nach der Ableitung ein Reaktorteil mit Gegenstromkühlung mit einer Zuleitung für das Kühlfluid aufweist. Der erste Reaktorteil A' wurde in Fig. 2 beschrieben. Der zweite Reaktorteil B' ist gekennzeichnet durch eine weitere Zuleitung für das Kühlfluid 16', die eine Kanal- 15' und Säulen- 14' Struktur aufweist.
Fig. 4:

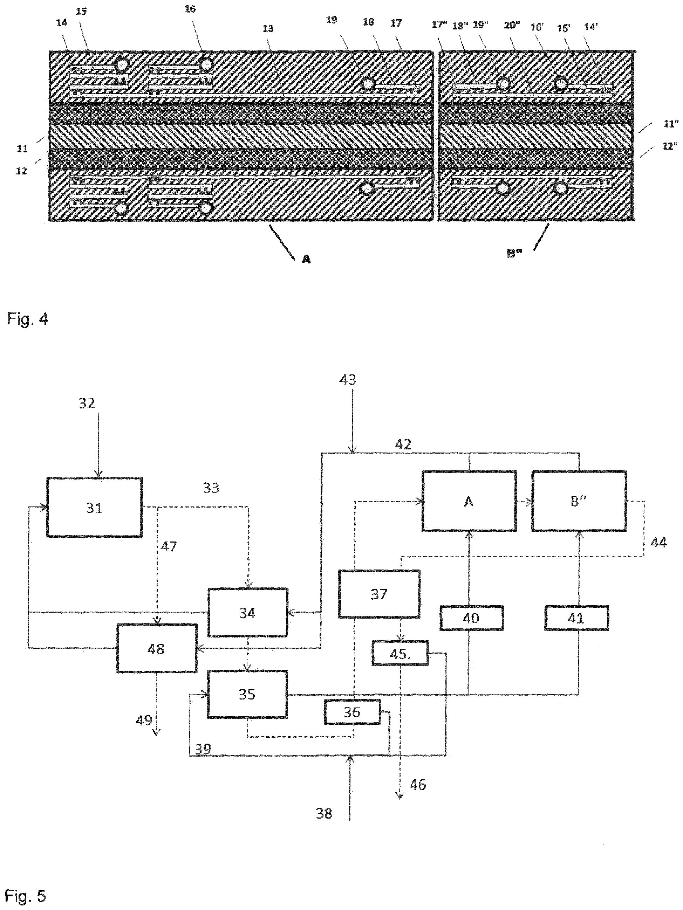

   In Figur 4 beschreibt eine Ausführung, in der zwei erfindungsgemäße Reaktoren dargestellt sind, die in Serie geschaltet werden können. Der erste Reaktor A ist in Figur 2 dargestellt. Der zweite Reaktor B" entspricht dem zweiten Teil des Reaktors B' aus Figur 3. Er weist ebenfalls eine zentrale Platte oder Ebene 11" und einen daran angrenzenden Reaktionsraum 12" auf. Ferner weist der zweite Reaktor B" eine Zuleitung 1' für das Kühlfluid auf mit Kanal- 15' und Säulen- 14' Struktur auf. Des Weiteren weist der zweite Reaktor eine Ableitung für das Kühlfluid 19" auf mit ebenfalls Kanal- 18" und Säulen- 17" Struktur. Die Kühlung im Kühlraum 20" erfolgt im Gegenstrom zur Strömung im Reaktorraum 12".
Fia. 5:
   In Figur 5 wird eine Ausführung des erfindungsgemäßen Systems bzw. der Vorrichtung zur Erzeugung und/oder Speicherung von Energien in Kohlenwasserstoffen, insbesondere Methan beschrieben. Eine Vorrichtung zur Hochtemperatur-Elektrolyse 31 wird mit Strom 32 versorgt. Als Edukte werden Wasser- und Kohlendioxid eingespeist. Eines der Produkte der Elektrolyse das abgeleitet wird, ist Sauerstoff 47. Weitere Produkte sind Wasserstoff und Kohlenmonoxid, welche Restbestandteile Kohlenstoffdioxid und Wasser bzw. Wasserdampf enthalten, 33. Diese werden im Wärmetauscher 34 und anschließend in 35 gekühlt. Im Anschluss an eine Gas-Flüssigtrennung 36 werden Wasserstoff und Kohlenstoffmonoxid, einschließlich Restbestandteile einem erfindungsgemäßen Reaktor A zugeführt. In diesem erfindungsgemäßen Reaktor mit Gleichstrom im Reaktions- und Kühlungsraum findet die Methanisierung von Kohlenmonoxid statt. Dieser ist mit einem zweiten erfindungsgemäßen Reaktor B" verbunden. In diesem liegt ein Gegenstrom im Kühlraum bzgl. des Reaktionsraums vor. Hier findet die weitere Methanisierung von Kohlenstoffmonoxid und insbesondere von Kohlenstoffdioxid statt. Feuchtes Methan, als Reaktionsprodukt der beiden erfindungsgemäßen Reaktoren 44, wird über dem Wärmetauscher 37 gegen die Reaktanden des Reaktors A gekühlt. In einer Gas-Flüssigtrennung 45 wird Wasser 39 abgetrennt, welches dem Wärmetauscher 35 zugeführt wird. Das trockene Methan 46 wird als Produkt aus dem System abgeführt und gespeichert oder unmittelbar verwendet. Im Wärmetauscher 35 wird das vom Reaktionsprodukt getrennte Wasser 39 durch die Produkte der Elektrolyse 33 erwärmt und zu den Wärmetauschern 40 und 41 geleitet. Bei den Wärmetauschern 40 und 41 handelt es sich mithin um Zusatzheizungen, die elektrisch, durch Verbrennung oder sonstigen Fremdwärmebezug gespeist werden. Anschließend wird das erwärmte Wasser als Kühlfluid mit einer Temperatur nahe dem Siedepunkt in erfindungsgemäße Reaktoren A und B" geleitet.

Aus den erfindungsgemäßen Reaktoren A und B" wird das Wasser, das als Kühlfluid verwendet wurde und nun als Gas vorliegt, über den Wärmetauscher 34 zu der Elektrolyse geleitet. Vor dem Wärmetauscher 34 wird Kohlenstoffdioxid 43 als Edukt für die Elektrolyse eingespeist. Im Wärmetauscher 34 werden mithin die Edukte der Elektrolyse gegen die Produkte der Elektrolyse erwärmt.

Als weiteres Produkt der Elektrolyse liegt Sauerstoff 47 vor, welcher im Wärmetauscher 48 gekühlt wird und als Produkt 49 aus dem System abgeleitet und gespeichert oder unmittelbar verwendet werden kann. Der Wärmetauscher 48 wird mit Wärmetauscher 34 parallel geschaltet und erwärmt ebenfalls die Edukte der Elektrolyse.

Das System ist fluid- und druckdicht. Gegebenenfalls kann Wasser 38 in das System eingespeist werden.

## Patentansprüche

1. Reaktor mit Reaktorhülle, Reaktionsraum und Kühlraum sowie mit fluiddichten, getrennten Zuleitungen für mindestens ein fluiden Reaktanden und für ein Kühlfluid **dadurch gekennzeichnet, dass** mindestens zwei Zuleitungen für das Kühlfluid vorliegen mit mindestens jeweils einer übereinander gefalteten Kanal- und Säulenstruktur mit Stromumkehr,
wobei der Reaktor mindestens eine Ableitung für das erwärmte Kühlfluidum besitzt, die mindestens eine übereinander gefaltete Kanal- und Säulenstruktur mit Stromumkehr aufweist,
wobei eine Kanalstruktur eine längliche Aushöhlung parallel zu der Strömungsrichtung im Reaktionsraum bedeutet und eine Säulenstruktur eine längliche Aushöhlung senkrecht zu der Strömungsrichtung im Reaktionsraum bedeutet,
wobei eine Säulenstruktur ein Teil der Leitung des Kühlfluids ist, das zwei Kanalstrukturen verbindet und so eine fluiddichte Leitung des Kühlfluids ermöglicht,
wobei der Reaktionsraum mit einem Katalysator beladen ist,
wobei der Kühlraum sich an die Zuleitung des Kühlfluids anschließt, bis zur Ableitung reicht und parallel zum Reaktionsraum verläuft.

2. Reaktor nach einem der vorangehenden Ansprüche **dadurch gekennzeichnet, dass** mindestens eine der mindestens zwei Zuleitungen für das Kühlfluid mindestens jeweils zwei übereinander gefaltete Kanal- und Säulenstrukturen mit Stromumkehr aufweisen.

3. Reaktor nach einem der vorangehenden Ansprüche **dadurch gekennzeichnet, dass** die mindestens zwei Zuleitungen im Bereich der ersten Hälfte des Reaktionsraums angeordnet sind.

4. Reaktor nach einem der vorangehenden Ansprüche **dadurch gekennzeichnet, dass** die mindestens zwei Zuleitungen und/oder die mindestens eine Ableitung im Bereich der übereinander gefalteten Kanal-und Säulenstrukturen mit Stromumkehr unterschiedliche Querschnitte bezüglich Form und/oder Fläche aufweisen.

5. Reaktor nach einem der vorangehenden Ansprüche **dadurch gekennzeichnet, dass** mindestens eine Zuleitungen in mindestens einer Säulenstruktur Sinterphasen, Sintermetalle, Fasern, Zylinder oder Ronden aufweist.

6. Reaktor nach einem der vorangehenden Ansprüche **dadurch kennzeichnet, dass** er nach der Ableitung ein Reaktorteil mit Gegenstromkühlung mit mindestens einer Zuleitungen für das Kühlfluid mit mindestens einer übereinander gefalteten Kanal- und Säulenstruktur mit Stromumkehr aufweist.

7. Reaktor nach einem der vorangehenden Ansprüche **dadurch gekennzeichnet, dass** er fluiddicht mit einer vorgeschalteten Elektrolysevorrichtung verbunden ist.

8. Verwendung eines Reaktors nach einem der vorangehenden Ansprüche in einem Verfahren zur Herstellung von Kohlenwasserstoffen, bevorzugt Methan.

9. Verfahren zum Betreiben eines Reaktors nach einem der Ansprüche 1 - 7.

10. Verfahren nach einem der Ansprüche 9 **dadurch gekennzeichnet, dass** das Kühlfluid mit einem Druck von 5 - 100 bar, bevorzugt 10 - 50, besonders bevorzugt 20 - 40 bar, insbesondere 30 bar zugeleitet wird.

11. Verfahren nach einem der Ansprüche 9 - 10 **dadurch gekennzeichnet, dass** das Kühlfluid mit einer Temperatur von 0,1 - 30 Kelvin, bevorzugt 1 - 20, besonders bevorzugt 5 - 10 Kelvin unter Siedetemperatur des Kühlfluids zugeleitet wird.

12. Verfahren nach einem der Ansprüche 9 - 11 **dadurch gekennzeichnet, dass** die Temperatur im Reaktionsraum/Katalysatorbett 100 - 800°C, bevorzugt 200 - 700°C, besonders bevorzugt 300 - 500°C beträgt.

13. Verfahren nach einem der Ansprüche 9 - 12 **dadurch gekennzeichnet, dass** die Temperaturdifferenz zwischen der Eintrittstemperatur des Reaktionsfluids und der Eintrittstemperatur des Kühlfluids 10 - 300°C, bevorzugt 50 - 250°C, besonders bevorzugt 100 - 200°C beträgt.

14. Verfahren nach einem der Ansprüche 9 - 13 **dadurch gekennzeichnet, dass** ein Abfallprodukt der Reaktion des Reaktionsraums als Kühlfluid eingesetzt wird.

15. Verfahren nach einem der Ansprüche 9 - 14 **dadurch gekennzeichnet, dass** mindestens zwei Reaktoren fluiddicht in Serie geschaltet werden, wobei der erste mittels Gleichstromführung, und der zweite mittels Gegenstromführung gekühlt werden.

## Claims

1. Reactor with reactor shell, reaction space and cooling space and with fluid-tight, separate supply lines for at least one fluid reactant and for a cooling fluid, **characterized in that** there are at least two supply lines for the cooling fluid each having at least one channel and column structure folded above one another with current reversal,
where the reactor has at least a discharge line for the warmed cooling fluid, which has at least one channel and column structure folded above one another with current reversal, where a channel structure means an elongated cavity parallel to the flow direction in the reaction space and a column structure means an elongated cavity perpendicular to the flow direction in the reaction space,
where a column structure is part of the conduction of the cooling fluid, which connects two channel structures and thus enables a fluid-tight conduction of the cooling fluid,
where the reaction space is loaded with a catalyst,
where the cooling space succeds to the supply line of the cooling fluid, extends until the discharge line and runs parallel to the reaction space.

2. Reactor according to one of the preceding claims, **characterized in that** at least one of the at least two supply lines for the cooling fluid each have at least two channel and column structures folded one above the other with current reversal.

3. Reactor according to one of the preceding claims, **characterized in that** the at least two supply lines are arranged in the region of the first half of the reaction space.

4. Reactor according to one of the preceding claims, **characterized in that** the at least two supply lines and/or the at least one discharge line in the region of the channel and column structures folded above one another with current reversal have different cross sections with respect to shape and/or surface.

5. Reactor according to one of the preceding claims, **characterized in that** at least one supply lines in at least one column structure has sintered phases, sintered metals, fibers, cylinders or blanks.

6. Reactor according to one of the preceding claims, **characterized in that** it has after the discharge a reactor part with countercurrent cooling with at least one supply lines for the cooling fluid and at least one channel and column structure folded one above another with current reversal.

7. Reactor according to one of the preceding claims, **characterized in that** it is fluid-tightly connected to an upstream electrolysis device.

8. Use of a reactor according to one of the preceding claims in a process for the preparation of hydrocarbons, preferably methane.

9. Method for operating a reactor according to one of claims 1 - 7.

10. Method according to one of claims 9, **characterized in that** the cooling fluid is fed with a pressure of 5 - 100 bar, preferably 10 - 50, more preferably 20 - 40 bar, in particular 30 bar.

11. Method according to one of claims 9 - 10, **characterized in that** the cooling fluid is fed at a temperature of 0.1 - 30 Kelvin, preferably 1 - 20, more preferably 5 - 10 Kelvin below the boiling temperature of the cooling fluid.

12. Method according to one of claims 9 - 11, **characterized in that** the temperature in the reaction space/catalyst bed is 100 - 800°C, preferably 200 - 700°C, more preferably 300 - 500°C.

13. Method according to one of claims 9 - 12, **characterized in that** the temperature difference between the inlet temperature of the reaction fluid and the inlet temperature of the cooling fluid is 10 - 300°C, preferably 50 - 250°C, more preferably 100 - 200°C.

14. Method according to one of claims 9 - 13, **characterized in that** a waste product of the reaction of the reaction space is used as cooling fluid.

15. Method according to one of claims 9 - 14, **characterized in that** at least two reactors are connected in series in a fluid-tight manner, the first being cooled by means of direct current flow and the second by means of countercurrent flow.

## Revendications

1. Réacteur avec enveloppe de réacteur, espace de réaction et espace de refroidissement et avec des conduites d'alimentation séparées et étanches aux fluides pour au moins un réactif fluide et pour un fluide de refroidissement, **caractérisé en ce qu'**il y a au moins deux conduites d'alimentation pour le fluide de refroidissement chacune avec au moins une structure de canal et de colonne repliée l'une sur l'autre avec inversion de courant,
dans lequel le réacteur a au moins une conduite d'évacuation pour le fluide de refroidissement chauffé, quelle a au moins une structure de canal et de colonne repliée l'une sur l'autre avec inversion de courant,
dans lequel une structure de canal signifie une cavité allongée parallèle à la direction d'écoulement dans l'espace de réaction et une structure de colonne signifie une cavité allongée perpendiculaire à la direction d'écoulement dans l'espace de réaction,
dans lequel une structure de colonne est un part de la conduite du fluide de refroidissement, que relie deux structures de canal et ainsi permet une conduite étanche au fluide du fluide de refroidissement,
dans lequel l'espace de réaction est chargé d'un catalyseur,
dans lequel l'espace de refroidissement succède à la conduite d'alimentation du fluide de refroidissement, s'étend jusqu'à la conduite d'évacuation et va parallèle à l'espace de réaction.

2. Réacteur selon l'une des revendications précédentes, caractérisé en ce que'au moins l'une des au moins deux conduites d'alimentation pour le fluide de refroidissement ont chaque au moins deux structures de canal et de colonne repliées l'une sur l'autre avec inversion de courant.

3. Réacteur selon l'une des revendications précédentes, **caractérisé en ce que** les au moins deux conduites d'alimentation sont arrangées dans la région de la première moitié de l'espace de réaction.

4. Réacteur selon l'une des revendications précédentes, **caractérisé en ce que** les au moins deux conduites d'alimentation et/ou l'au moins une conduite d'évacuation dans la région des deux structures de canal et de colonne repliées l'une sur l'autre avec inversion de courant ont des coupes transversales différentes en ce qui concerne la forme et/ou la surface.

5. Réacteur selon l'une des revendications précédentes, **caractérisé en ce que** l'au moins une des conduites d'alimentation dans l' au moins une structure de colonne a des phases de frittage, des métaux frittés, des fibres, des cylindres ou des rondes.

6. Réacteur selon l'une des revendications précédentes, **caractérisé en ce qu'**il a après l'évacuation un part de réacteur avec refroidissement à contre-courant avec au moins une conduites pour le fluide de refroidissement avec au moins une structure de canal et de colonne repliées l'une sur l'autre avec inversion de courant.

7. Réacteur selon l'une des revendications précédentes, **caractérisé en ce qu'**il est connecté, étanche aux fluides, à un appareil d'électrolyse, disposé en amont.

8. Utilisation d'un réacteur selon l'une des revendications précédentes dans un procédé pour la préparation des hydrocarbures, de préférence méthane.

9. Procédé pour l'exploitation d'un réacteur selon l'une des revendications 1 - 7.

10. Procédé selon l'une des revendications 9, **caractérisé en ce que** le fluide de refroidissement est amené avec une pression de 5 - 100 bar, préféré 10 - 50, particulièrement préféré 20 - 40 bar, en particulier 30 bar.

11. Procédé selon l'une des revendications 9 - 10, **caractérisé en ce que** le fluide de refroidissement est amené à une température de 0.1 - 30 Kelvin, préféré 1 - 20, plus préféré 5 - 10 Kelvin sous la température d'ébullition du fluide de refroidissement.

12. Procédé selon l'une des revendications 9 - 11, caractérisé en ce la température dans l'espace de réaction/lit de catalyseur est 100 - 800°C, préféré 200 - 700°C, particulièrement préféré 300 - 500°C.

13. Procédé selon l'une des revendications 9 - 12, **caractérisé en ce que** la différence de la température entre la température d'entrée du fluide de réaction et de la température d' entrée du fluide de refroidissement est 10 - 300°C, préféré 50 - 250°C, particulièrement préféré 100 - 200°C.

14. Procédé selon l'une des revendications 9 -13, **caractérisé en ce qu'**un résidu de la réaction de l'espace de réaction est utilisé comme fluide de refroidissement.

15. Procédé selon l'une des revendications 9 - 14, **caractérisé en ce qu'**au moins deux réacteurs sont commutés en série étanche au fluides, le premier étant refroidi au moyen d'un courant continu et le deuxième au moyen d'un contre-courant.
